# EUROPÄISCHE PATENTSCHRIFT

(11) **EP 0 471 270 B1**
(45) Veröffentlichungstag und Bekanntmachung des Hinweises auf die Patenterteilung: **18.10.1995**
(21) Anmeldenummer: 91113164.7
(22) Anmeldetag: 06.08.1991
(51) Int. Cl.: F16K 1/226

(54) **Absperrklappe**
Butterfly valve
Clapet d'arrêt

(30) Priorität: 16.08.1990 DE 4025832
(43) Veröffentlichungstag der Anmeldung: 19.02.1992
(73) Patentinhaber: XOMOX INTERNATIONAL GMBH & CO., D-88114 Lindau/B. (DE)
(72) Erfinder: Gonsior, Wolfgang, W-8990 Lindau-Bodolz (DE)
(74) Vertreter: Klose, Hans, Dipl.-Phys.

(56) Entgegenhaltungen:
- DE-A- 2 529 509
- DE-A- 2 811 035
- US-A- 3 556 476
- US-A- 3 642 248
- US-A- 3 834 663

## Beschreibung

Die Erfindung bezieht sich auf eine Absperrklappe, die insbesondere auch als eine Regelklappe ausgebildet ist, gemäß den im Oberbegriff des Patentanspruchs 1 angegebenen Merkmalen.

Aus der DE-A-25 29 509 ist eine derartige Absperrklappe bekannt, welche einen Sitzring und eine Dichtlippe aus Metall aufweist. Die in radialer Richtung elastisch verformbare und federelastisch an einer Dichtfläche der Klappenscheibe anliegende metallische Dichtlippe ist ebenso wie ein in den Sitzring eingebrachter Freistich konisch angeordnet. Die Abstimmung der verschiedenen Toleranzen bedingt insgesamt einen entsprechend hohen Fertigungsaufwand, wobei ggf. mittels eines zusätzlichen elastischen Dichtringes den heutigen Anforderungen hinsichtlich minimaler Leckrate entsprochen wird. Aufgrund von Fertigungsungenauigkeiten ist die Flächenpressung der Dichtlippe über den Umfang unregelmäßig, wobei die Leckrate maßgeblich von dem Bereich mit der geringsten Flächenpressung abhängt. Um eine örtlich zu geringe Flächenpressung zu vermeiden, wird insgesamt ein recht hoher Anpreßdruck vorgegeben, so daß zum Öffnen und Schließen der Klappenscheibe ein vergleichsweise großes Drehmoment aufgebracht werden muß und ein entsprechend starker Stellantrieb erforderlich ist. Ferner sind ein recht hoher Abrieb und eine kurze Lebensdauer zu befürchten, wenn zur Reduzierung der Leckrate der Anpreßdruck erhöht wird.

Ferner ist aus der DD-A-142 377 ein Klappenventil bekannt, dessen metallischer Sitzring eine gewölbte Sitzfläche für die Klappenscheibe aufweist. Zur Verbindung der Sitzfläche mit dem Sitzring ist ein in etwa radial gerichteter Steg vorgesehen, welcher eine gewisse elastische Bewegung des inneren Teiles des Sitzringes mit der gewölbten Sitzfläche beim Schließen der Klappenscheibe ermöglicht. Es ist ein nicht unerheblicher Fertigungsaufwand erforderlich, zumal die Toleranzen verschiedener Teile exakt aufeinander abgestimmt sein müssen. Bei der Montage muß der Sitzring bezüglich der Klappenscheibe exakt positioniert und festgelegt werden, wobei derartige Maßnahmen den Einsatz qualifizierten Personals und einen entsprechenden Kostenaufwand erfordern.

Desweiteren ist aus der japanischen Patentanmeldung 63-210 472 A ein Sicherheitsventil bekannt, welches für den Normalbetrieb einen Dichtring aus einem Elastomer und aus Sicherheitsgründen eine zusätzliche Dichtlippe aus Metall enthält. Um allein mit einer metallischen Dichtlippe, wofür der Fachmann keine Anregung erhält, eine hinreichende Dichtung zu erhalten, müßten vergleichsweise hohe Flächenpressungen der Dichtlippe an der Klappenscheibe in Kauf genommen werden, wodurch erhebliche Nachteile, vor allem hinsichtlich Abrieb und Lebensdauer bedingt wären.

Der Erfindung liegt daher die Aufgabe zugrunde, die Absperr- klappe der genannten Art dahingehend weiterzubilden, daß mit reduziertem Konstruktions- und Fertigungsaufwand die Dichtigkeit verbessert wird, wobei das Drehmoment zur Betätigung der Klappenscheibe reduziert werden soll.

Die Lösung dieser Aufgabe erfolgt gemäß den kennzeichnenden Merkmalen des Patentanspruchs 1.

Die vorgeschlagene Absperrklappe zeichnet sich durch eine einfache Konstruktion aus und ermöglicht eine kostengünstige Fertigung. Die Dichtlippe wird unter Beachtung üblicher Fertigungstoleranzen aus dem integrierten Sitzring gefertigt und die für eine hohe Dichtigkeit und minimale Leckrate notwendige Anpassung an die Geometrie der Klappenscheibe erfolgt durch bleibende plastische Verformung radial nach außen. So wird auch für den Normalbetrieb eine minimale Leckrate mittels der metallischen Dichtlippe erreicht. Aufgrund der selbsttätigen Anpassung und Ausrichtung der Dichtlippe infolge der vorgeschlagenen plastischen Verformung wird eine hohe Dichtigkeit ermöglicht, ohne daß insoweit vergleichsweise hohe Drehmomente zum Verstellen der Klappenscheibe beim Öffnen oder Schließen aufgebracht werden müßten. Beim Schließen der Klappenscheibe wird die federnde Dichtlippe radial im elastischen Bereich verformt, wobei aufgrund der durch die plastische Verformung erreichten Anpassung und Ausrichtung der Dichtlippe deutliche Überbeanspruchungen vermieden werden.

Der Sitzring weist eine Dichtfläche auf, welche durch Einbringen eines ringförmigen Freistiches in den Sitzring hergestellt ist. Die Dichtlippe weist nach der Fertigung zunächst eine erste Ausrichtung bezüglich der Längsachse auf und wird nachfolgend um einen vorgegebenen Winkel plastisch verformt und nimmt dann eine zweite Ausrichtung bezüglich der Längsachse ein. Bei der Herstellung des Sitzringes mit der Dichtlippe müssen daher keine allzu hohen Anforderungen hinsichtlich der Formgebung der Dichtlippe beachtet werden. Die Dichtlippe wird unter Beachtung üblicher Fertigungstoleranzen aus dem integrierten Sitzring gefertigt und die für eine hohe Dichtigkeit und minimale Leckage notwendige Anpassung an die Geometrie der Klappenscheibe erfolgt durch plastische Verformung der Dichtlippe. Somit wird auch und gerade im Normalbetrieb eine minimale Leckrate erreicht, ohne daß hierzu ein zusätzlicher Dichtring aus einem nichtmetallischen elastischen Werkstoff zum Einsatz gelangt. Desweiteren werden punktuelle Erhöhungen der Flächenpressung, sei es auf den Umfang bezogen oder sei es in axialer Richtung, aufgrund der plastischen Verformung der Dichtlippe zuverlässig auf ein Minimum reduziert, wodurch eine lange Lebensdauer der Absperrklappe gewährleistet wird. Die ebenso wie der Sitzring insgesamt aus Metall bestehende Dichtlippe wird beim Schließen der Klappenscheibe radial federnd nach außen gedrückt und liegt unter radialer Vorspannung an der Dichtfläche der Klappenscheibe an, wobei Ungenauigkeiten, Toleranzen und vor allem auch ein Achsversatz aufgrund einer Exzentrizität selbsttätig ausgeglichen werden. Ist nach der Herstellung die Dichtlippe im wesentlichen zylindrisch und koaxial zur Längsachse der Klappe ausgerichtet, so wird hierdurch eine nicht unwesentliche Verringerung des Fertigungsaufwandes erreicht, da keine komplexen Werkzeuge und/oder aufwendige Bearbeitungsmaßnahmen zur Fertigung der Dichtlippe und des Freistiches benötigt werden. Durch die bleibende plastische Verformung wird die Dichtlippe exakt auf die Geometrie der sphärischen Dichtfläche der Klappenscheibe ausgerichtet, wobei diese Selbstausrichtung und Justierung von besonderer Bedeutung für Klappen mit exzentrisch oder doppeltexzentrisch angeordneten Klappenscheiben ist.

Hier sei festgehalten, daß bei einer doppelexzentrischen Lagerung eine Klappenscheibe einerseits ein Versatz bezüglich der Dichtungsmittellinie und andererseits eine Exzentrizität bezüglich der Längsachse der Klappe vorhanden ist. Die vorgeschlagene Selbstausrichtung der Dichtlippe durch bleibende plastische Verformung gewährleistet mit geringem Aufwand eine funktionssichere Anpassung an die besondere Geometrie der exzentrisch oder doppel-exzentrisch gelagerten Klappenscheiben.

Weiterbildungen und besondere Ausgestaltungen der Erfindung sind in den Unteransprüchen angegeben.

Die Erfindung wird nachfolgend anhand des in der Zeichnung dargestellten Ausführungsbeispiels näher erläutert. Es zeigen:
- Fig. 1: teilweise einen axialen Schnitt in geschlossener Position der Klappenscheibe,
- Fig. 2: einen axialen Schnitt ähnlich Fig. 1, jedoch bei teilweise geöffneter Position der Klappenscheibe,
- Fig. 3: einen axialen Schnitt durch den Sitzring mit integrierter Dichtlippe, und zwar vor dem Einbau in das Gehäuse der Absperr- und Regelklappe
- Fig. 4: vergrößert den Ausschnitt X gemäß Fig. 3.

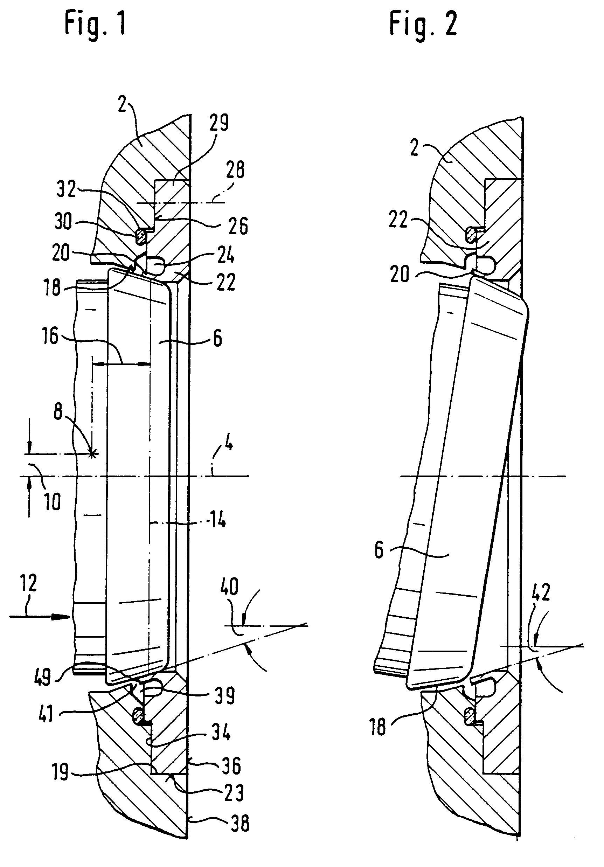

Fig. 1 zeigt in einem axialen Längsschnitt teilweise ein Gehäuse 2 der Absperr- und Regelklappe. In dem Gehäuse 2, welches eine Längsachse 4 besitzt, ist eine Klappenscheibe 6 um eine Achse 8 drehbar angeordnet. Diese Achse 8 steht gemäß der Zeichnung senkrecht zur Zeichenebene und liegt in einem Abstand 10 exzentrisch zur Längsachse 4. In der dargestellten Position sperrt die Klappenscheibe 6 die Strömung eines Mediums ab, wobei hier die Strömungsrichtung durch den Pfeil 12 angedeutet ist. Mit der gestrichelten Linie 14 ist eine Dichtungsmittellinie angedeutet, zu welcher die Achse 8 einen Versatz 16 aufweist. Die derart doppelt exzentrisch im Gehäuse 2 angeordnete Klappenscheibe 6 enthält an ihrem Außenumfang eine gekrümmte bzw. eine sphärische Dichtfläche 18, an welcher eine Dichtlippe 20 eines Sitzringes 22 dicht anliegt. Das Gehäuse 2 enthält zur Aufnahme des Sitzringes 22 eine ringförmige Ausnehmung mit einer Zentrierfläche 19. Die Zentrierfläche 19 ist insbesondere als eine zylindrische Mantelfläche koaxial zur Längsachse 4 ausgebildet. An der Zentrierfläche 19 liegt der Sitzring 22 über eine Schiebepassung mit seiner korrespondierenden Außenfläche 23 an. Bei der Montage wird der Sitzring in einfacher Weise in die genannte Ausnehmung eingesetzt, wobei selbstätig eine definierte Ausrichtung bezüglich des Gehäuses 2 über die Zentrierfläche 19 erfolgt. Aufwendige Justiermaßnahmen entfallen.

Die Dichtlippe 20 ist integraler Bestandteil des Sitzringes 22 und wurde durch Einbringen eines Freistiches 24 koaxial zur Längsachse 4 hergestellt. Der Sitzring 22 ist in einer ersten ringförmigen Ausnehmung 26 des Gehäuses 2 angeordnet und insbesondere mittels Schrauben, welche durch die strichpunktierten Linien 28 angedeutet sind, unmittelbar mit dem Gehäuse 2 befestigt. Der radial außen liegende Teil 29 mit Bohrungen für die genannten Schrauben entspricht einem Sitzhaltering; der Sitzring ist in den Sitzhaltering integriert und einteilig mit diesem ausgebildet. Die einstückig mit dem Sitzring 22 ausgebildete Dichtlippe 20 liegt mit radialer Vorspannung an der Dichtfläche 28 der Klappenscheibe 6 an. Hierdurch ergeben sich zusätzliche Vorteile hinsichtlich der axialen Gesamtbaulänge der Absperr- und Regelklappe.

Beim Schließen der Klappenscheibe 6 wird die federnde Dichtlippe 20 im elastischen Bereich verformt und an die Dichtfläche 20 angedrückt. Die hierdurch entstehende radiale Dichtkraft wird vom Mediumdruck unterstützt, welcher im Freistich 24 vorhanden ist und auf die Dichtlippe 20 eine radial in Richtung zur Längsachse nach innen gerichtete Kraftkomponente bewirkt. Mit einem Dichtring 30, welcher bevorzugt aus Graphit besteht bzw. Graphit enthält, erfolgt die Abdichtung zwischen dem Gehäuse 2 und dem Sitzring 22. Der Dichtring 30 ist in einer Ringnut 32 des Gehäuses 2 angeordnet, wobei der Sitzring 22 mit einer axialen Stirnfläche 34 an dem Dichtring 30 anliegt. Die andere axiale Stirnfläche 36 des Sitzringes 22 liegt gemeinsam mit einer axialen Endfläche 38 des Gehäuses 2 in einer Radialebene.

In der geschlossenen Position ist die Dichtlippe 20 konisch ausgerichtet und weist zur Längsachse 4 einen ersten Winkel 40 auf. Je nach der Nennweite der Klappe liegt dieser erste Winkel zwischen 25 und 10 Grad, wobei der größere Winkelwert für die kleineren Nennweiten gilt. So hat es sich als zweckmäßig erwiesen, für eine Nennweite von 80 mm einen Winkel von im wesentlichen 21 Grad und für eine Nennweite von 300 einen Winkel von im wesentlichen 13 Grad vorzugeben. Das Gehäuse 2 enthält in axialer Richtung gegenüber dem Freistich 24 eine zweite Ausnehmung 39 derart, daß zum freien Ende der Dichtlippe 20 ein Ringspalt 41 vorhanden ist, so daß der Mediumdruck in dem Freistich 24 wirksam wird. Die Dichtlippe 20 ragt mit ihrem freien Ende teilweise in die zweite Ausnehmung 39 des Gehäuses 2 ein. Hierdurch ergeben sich Vorteile hinsichtlich der axialen Länge der Klappe. Auch bei einer vergleichsweise großen axialen Länge der Dichtlippe 20 muß die Baulänge und/oder die Baugröße der Klappe nicht vergrößert werden.

Fig. 2 zeigt die Klappenscheibe 6 in einer teilweise geöffneten Position. Wie ersichtlich, liegt aufgrund der doppelt exzentrischen Lagerung der Klappenscheibe 6 diese mit der Dichtfläche 18 im oberen Teil der Figur noch an der Dichtlippe 20 an, während im unteren Teil die Dichtfläche bereits außer Eingriff mit der Dichtlippe 20 ist. Die Dichtlippe 20 weist in der Offenstellung der Klappenscheibe 6 zur Längsachse 4 einen zweiten Winkel 42 auf, welcher erfindungsgemäß kleiner ist als der vorstehende genannte erste Winkel. Dieser zweite Winkel für die Offenstellung bzw. Einbaulage des Sitzringes liegt im Bereich zwischen 23 und 8 Winkelgraden, und zwar wiederum entsprechend der Nennweite. Für Nennweiten von 80 mm liegt dieser zweite Winkel 42 im wesentlichen bei 19 Grad, während er für Nennweiten von 300 mm bei im wesentlichen 12 Grad liegt. Entsprechend der Winkeldifferenz zu der in Fig. 1 dargestellten geschlossenen Position ist in letzterer eine radiale Vorspannung der Dichtlippe 20 gegeben, wobei durch diese radiale, federelastische Vorspannung eine gute Dichtwirkung erreicht wird, welche zusätzlich vom Mediumdruck in dem Freistich 24 unterstützt wird.

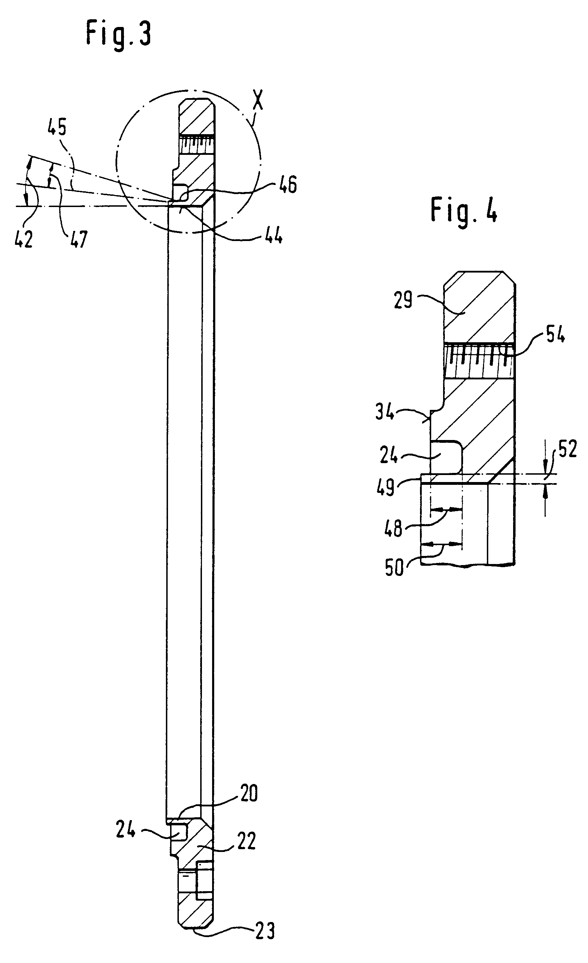

Fig. 3 zeigt den Sitzring 22 mit der integrierten Dichtlippe 20 im Neuzustand, also vor dem Einbau in das Gehäuse. Durch Einbringen des Freistiches 24 wurde die Dichtlippe 20 mit einer zylindrischen Innenfläche 44 und einer zylindrischen Außenfläche 46 hergestellt, wobei die Dichtlippe einen im wesentlichen rechteckförmigen Querschnitt aufweist. Obgleich die Anordnung der Innenfläche 44 und deren Außenfläche 46 auf Zylindermantelflächen als besonders zweckmäßig im Hinblick auf die Fertigung sich herausgestellt hat, können diese auch eine andere Ausrichtung bezüglich der Längsachse 4 einnehmen, wie es allgemein mittels der Linie 45 angedeutet ist. Maßgebend ist für alle Ausführungsformen, daß ausgehend von der zunächst vorgegebenen Ausrichtung der Dichtlippe 20 nachfolgend eine bleibende Verformung über einen vorgegebenen Winkel 47 durchgeführt wird. Hierdurch erfolgt in optimaler Weise die Anpassung und der Ausgleich von Fertigungstoleranzen, so daß bei der Fertigung selbst die diesbezüglichen Anforderungen gering einzustufen sind. Weiterhin sind bei der Montage und nach dem Einbau des Sitzringes 22 in die oben erwähnte Ausnehmung des Gehäuses keine zusätzlichen Justiermaßnahmen erforderlich, zumal die Außenfläche 23 an der zugeordneten Zentrierfläche anliegt, wobei übliche Toleranzen für einen Schiebesitz zu beachten sind. Aufgrund einer solchen Schiebesitzpassung kann bei der Montage der Sitzring 22 ohne Schwierigkeiten in die zugeordnete Ausnehmung des Gehäuses eingeschoben werden und nachfolgend ist lediglich noch eine Festlegung im Gehäuse durchzuführen. Hierzu ist kein zusätzlicher Sitzhaltering notwendig, sondern die Festlegung erfolgt ohne besonderen Aufwand unmittelbar mittels Schrauben oder dergleichen.

Nach der Montage in das Gehäuse wird durch Betätigung der Klappenscheibe eine bleibende Verformung der Dichtlippe 20 in den oben anhand von Fig. 2 erläuterten zweiten Winkel vorgenommen. Diese bleibende Verformung ist wesentlich größer als die elastische Verformung der Dichtlippe 20 während des Betriebs. Die Ausrichtung der Dichtlippe 20 nach der Fertigung entsprechend der Linie 45 und die Vorgabe des Winkels 47 für die plastische Verformung der Dichtlippe 20 erfolgt nach den jeweiligen Anforderungen, wobei vor allem der Nenndurchmesser der Klappe und die Werkstoffeigenschaften des Sitzringes 22 zu berücksichtigen sind. Die genannte plastische Verformung der aus Metall bestehenden Dichtlippe 20 kann ggfs. auch in mehreren Schritten durchgeführt werden, wobei hier vor allem auf größere Klappendurchmesser verwiesen sei. So kann bereits ein Teil der erforderlichen plastischen Verformung noch vor dem Einbau des Sitzringes in das Gehäuse erfolgen, so daß die mittels der Klappenscheibe erfindungsgemäß durchzuführende Verformung minimiert wird. Hierdurch können vor allem bei größeren Klappendurchmessern unzulässig hohe Belastungen der Klappenscheibe, und zwar insbesondere deren Lagerungen, in zweckmäßiger Weise vermieden werden. Hingegen hat es sich vor allem bei kleineren Klappendurchmessern als sinnvoll erwiesen, die gesamte Verformung komplett erst nach dem Einbau des Sitzringes mittels der Klappenscheibe durchzuführen.

Die Fertigung des Sitzringes mit der Dichtlippe erfordert keinen besonderen Aufwand, wobei vor allem auch keine extremen Genauigkeitsanforderungen hinsichtlich der Geometrie der Dichtlippe zu beachten sind. Auch eine Nachbearbeitung der Dichtlippe, beispielsweise entsprechend der sphärischen Dichtfläche der Klappenscheibe entfällt. Aufgrund der bleibenden Verformung der Dichtlippe 20 mittels der Klappenscheibe nach dem Zusammenbau der Absperr- und Regelklappe erfolgt in besonders zweckmäßiger Weise ein Ausgleich von Fertigungsungenauigkeiten und dergleichen mit der Folge, daß einerseits eine sehr gute Dichtwirkung erreicht wird und andererseits das Drehmoment zum Schließen bzw. Öffnen der Klappenscheibe gegenüber vorbekannten Konstruktionen wesentlich reduziert wird. Von besonderer Bedeutung ist darüber hinaus, daß die Dichtlippe gemäß exzentrischer bzw. doppelt exzentrischer Lagerung der Klappenscheibe nicht entsprechend bearbeitet werden muß, sondern mit der bleibenden Verformung, insbesondere nach dem Einbau, selbsttätig die erforderliche Anpassung an die insoweit erforderliche Geometrie vorgenommen wird. Der Sitzring 22 und somit auch die Dichtlippe 20 weisen einen Elastizitätsmodul im Bereich zwischen 150 und 230 kN/mm² auf, wobei sich ein Elastizitätsmodul im Bereich zwischen 170 kN/mm² und 200 kN/mm² als besonders zweckmäßig erwiesen hat.

Wie aus der vergrößerten Darstellung gemäß Fig. 4 ersichtlich, weist der Freistich 24 eine axiale Tiefe 48 auf, während die Dichtlippe 20 eine axiale Länge 50 besitzt. In einer zweckmäßigen Ausgestaltung ist die axiale Tiefe 48 zwischen 4 bis 6 mm groß und beträgt im wesentlichen 5 mm. Die Dichtlippe 20 ragt mit ihrem freien Ende 49 in axialer Richtung mit einem vorgegebenen Faktor über die Anlage- bzw. axiale Stirnfläche 34 vor. Die Länge 50 der Dichtlippe 20 ist um einen vorgegebenen Faktor größer als die axiale Tiefe 48 des Freistiches 24. Entsprechend der Länge 50 der Dichtlippe 20 wird in besonders zweckmäßiger Weise die freie Federweglänge vorgegeben und damit die radiale Andrückkraft in definierter Weise dimensioniert. Die Länge 50 der Dichtlippe 20 liegt im Bereich zwischen 4 und 8 mm und liegt zweckmäßig zwischen 5 und 7 mm. Die radiale Breite 52 der Dichtlippe 20 liegt im Bereich zwischen 0,7 bis 1,8 mm und beträgt im wesentlichen 1,0 bis 1,5 mm. In dem radial äußeren Teil 29, welcher dem Haltering entspricht, ist eine der Bohrungen 54 zur direkten Befestigung des Sitzringes 22 im Gehäuse dargestellt.

### Bezugszeichen

- 2: Gehäuse
- 4: Längsachse
- 6: Klappenscheibe
- 8: Achse von 6
- 10: Abstand
- 12: Pfeil
- 14: gestrichelte Linie
- 16: Versatz
- 18: Dichtfläche von 6
- 19: Zentrierfläche
- 20: Dichtlippe
- 22: Sitzring
- 23: Außenfläche von 22
- 24: Freistich
- 26: Ausnehmung
- 28: strichpunktierte Linie
- 29: Teil von 22
- 30: Dichtring
- 32: Ringnut
- 34, 36: Stirnfläche von 30
- 38: Endfläche von 2
- 39: Ausnehmung
- 40: erster Winkel
- 41: Spalt
- 42: zweiter Winkel
- 44: Innenfläche von 20
- 45: Linie
- 46: Außenfläche von 20
- 47: vorgegebener Winkel
- 48: axiale Tiefe von 24
- 49: freies Ende von 20
- 50: Länge von 20
- 52: Breite von 20
- 54: Bohrung in 22

## Patentansprüche

1. Absperrklappe, die insbesondere auch als eine Regelklappe ausgebildet ist, mit einem Gehäuse (2), in welchem eine Klappenscheibe (6) insbesondere doppelt exzentrisch drehbar gelagert ist, sowie mit einem metallischen Sitzring (22), welcher als integraler Bestandteil eines direkt am Gehäuse (2) befestigten Sitzhalteringes ausgebildet ist, und welcher eine einstückig angeformte, in radialer Richtung elastisch verformbare und radial federelastische an einer Dichtfläche (18) der Klappenscheibe (6) anliegende Dichtlippe (20) aufweist, wobei der Sitzring (22) einen den Bereich der radialen Außenfläche (46) der Dichtlippe (20) umschließenden Freistich (24) aufweist,
dadurch gekennzeichnet,
daß nach dem Einbau des Sitzringes (22) und der Klappenscheibe (6) in das Gehäuse (2) die Dichtlippe (20), zumindest teilweise durch das erstmalige Schließen der Klappenscheibe (6), durch bleibende plastische Verformung radial nach außen um einen vorgegebenen Winkel (42) gebogen ist,
und daß der durch bleibende plastische Verformung vorgegebene Winkel (42) größer ist als der Winkel, um welchen die Dichtlippe (20) beim weiteren Schließen der Klappenscheibe (6) elastisch nach außen gebogen wird.

2. Klappe nach Anspruch 1, dadurch gekennzeichnet, daß der Freistich (24) in einer axialen Stirnfläche (34) des Sitzringes (22) angeordnet ist.

3. Klappe nach Anspruch 1 oder 2, dadurch gekennzeichnet, daß vor der bleibenden plastischen Verformung (45) der Dichtlippe deren Innenfläche (44) und/oder deren Außenfläche (46) im wesentlichen auf zur Längsachse (4) koaxialen Zylindermantelflächen angeordnet sind.

4. Klappe nach einem der Ansprüche 1 bis 3, dadurch gekennzeichnet, daß die Dichtlippe (20) eine in, wesentlichen rechteckförmige Querschnittsfläche aufweist.

5. Klappe nach einem der Ansprüche 1 bis 4, dadurch gekennzeichnet, daß das Gehäuse (2) eine erste ringförmige Ausnehmung (36) aufweist, in welche die Dichtlippe (20) mit ihrem freien Ende (49) hineinragt, und/oder daß zwischen dem freien Ende (49) und der gegenüberliegenden Gehäusewand nur ein enger Spalt (41) vorhanden ist.

6. Klappe nach einem der Ansprüche 2 bis 5, dadurch gekennzeichnet, daß die Dichtlippe (20) eine Länge (50) aufweist, welche um einen vorgegebenen Faktor größer ist als die axiale Tiefe (48) des Freistiches (24), wobei dieser Faktor bevorzugt zwischen 1,2 bis 2, insbesondere zwischen 1,4 bis 1,7, liegt.

7. Klappe nach einem der Ansprüche 1 bis 2, dadurch gekennzeichnet, daß die Dichtlippe (20) über ihre axiale Länge (50) im wesentlichen die gleiche Breite aufweist, wobei diese Breite im Bereich zwischen 0,8 bis 1,7, bevorzugt zwischen 1,0 und 1,5 mm groß ist, wobei mit zunehmender Nennweite der Klappe größere Werte für die Breite vorgegeben sind.

8. Klappe nach einem der Ansprüche 1 bis 7, dadurch gekennzeichnet, daß der Neigungswinkel der Dichtlippe (20) bezüglich der Längsachse in der Offenstellung der Klappenscheibe (6) im Bereich zwischen 22 bis 10 Winkelgraden im wesentlichen zwischen 19 bis 12 Winkelgraden, groß ist und daß in der geschlossenen Position der Klappenscheibe (6) die Dichtlippe (20) bezüglich der Längsachse (4) in einem Winkelbereich zwischen 22 bis 10 Winkelgraden, insbesondere zwischen 21 bis 13 Winkelgraden steht, wobei die größeren der genannten Winkelwerte für die kleineren Nennweiten der Klappe (6), insbesondere für Nennweiten von 80 mm, und die kleineren Winkelwerte für die größeren Nennweiten, insbesondere für Nennweiten von 300 mm, der Klappe (6) gelten.

9. Klappe nach einem der Ansprüche 1 bis 8, dadurch gekennzeichnet, daß der Sitzring (22) aus Metall besteht und einen Elastizitätsmodul im Bereich zwischen 150 bis 230 kN/mm², bevorzugt zwischen 170 und 200 kN/mm², aufweist.

10. Klappe nach einen, der Ansprüche 1 bis 9, dadurch gekennzeichnet, daß der Sitzring (22) in einer zweiten ringförmigen Ausnehmung (26) des Gehäuses (2) angeordnet ist und/oder eine axiale Stirnfläche (36) aufweist, welche im wesentlichen in der gleichen Radialebene wie die Endfläche (38) des Gehäuses (2) liegt.

## Claims

1. Shut-off valve, which in particular is constructed as a regulating valve, comprising a housing (2), in which a valve disk (6) is mounted doubly eccentrically, and a metal seat ring (22) which is formed as an integral part of a seat holding ring which is fastened directly to the housing (2), and which is provided with a sealing lip (20) which bears against a sealing surface (18) of the valve disk (6) and which is elastically deformable in the radial direction and is radially resilient, the seat ring (22) being provided with a groove (24) which surrounds the region of the radially outer surface (46) of the sealing lip (20), characterised in that after insertion of the seat ring (22) and the valve disk (6) into the housing (20) the sealing lip (20) is bent, at least partially by the first closing of the valve disk (6), radially outwardly by a predetermined angle (42) through permanent plastic deformation, and in that the angle (42) predetermined by the permanent plastic deformation is greater than the angle by which the sealing lip (20) is bent elastically outwards by further closing of the valve disk (6)

2. Valve according to Claim 1, characterised in that the groove (24) is arranged in an axial end surface (34) of the seat ring (22).

3. Valve according to Claim 1 or Claim 2, characterised in that before the permanent plastic deformation (45) of the sealing lip, the inner surface (44) and/or the outer surface (46) thereof are arranged substantially as cylindrical surfaces co-axial to the longitudinal axis (4).

4. Valve according to one of Claims 1 to 3, characterised in that the sealing lip (20) is provided with a substantially rectangular cross-section.

5. Valve according to one of Claims 1 to 4, characterised in that the housing (2) is provided with a first annular recess (36) into which the free end (49) of the sealing lip (20) extends, and/or in that between the free end (49) and the opposing wall of the housing only a narrow gap (41) is present.

6. Valve according to one of Claims 2 to 5, characterised in that the sealing lip (20) has a length (50) which is greater than the axial depth (48) of the groove (24) by a predetermined factor, this factor being preferably between 1.2 and 2.0, in particular between 1.4 and 1.7.

7. Valve according to one of Claims 1 to 2, characterised in that the sealing lip (20) has substantially the same width over its axial length (50), this width being in the range 0.8 to 1.7mm, preferably between 1.0 and 1.5mm, greater values for the width being provided for increasing nominal widths of the valve.

8. Valve according to one of Claims 1 to 7, characterised in that the angle of inclination of the sealing lip (20) relative to the longitudinal axis when the valve disk is in the open position is in the range of 22 to 10 degrees, in particular 19 to 12 degrees, and in that in the closed position of the valve disk (6), the sealing lip (20) lies at an angle relative to the longitudinal axis (4) of between 22 to 10 degrees, in particular between 21 and 13 degrees, the greater of the specified angles applying to smaller nominal widths of the valve (6), in particular for nominal widths of 80mm, and the smaller angles applying to greater nominal widths, in particular for nominal widths of 300mm.

9. Valve according to one of Claims 1 to 8, characterised in that the seat ring (22) is of metal and has a modulus of elasticity in the region of 150 to 230 kN/mm², preferably between 170 and 200 kN/mm².

10. Valve according to one of Claims 1 to 9, characterised in that the seat ring (22) is arranged in a second annular recess (26) in the housing (2) and/or has an axial end face (36) which lies in substantially the same radial plane as the end face (38) of the housing (2).

## Revendications

1. Clapet d'arrêt, qui adopte aussi en particulier la configuration d'un clapet de régulation, comprenant un boîtier (2) dans lequel est placé a disque (6) de clapet en particulier doublement excentrique, comprenant aussi un siège annulaire métallique (22), lequel est conformé en partie intégrante d'une bague de retenue annulaire fixée directement sur le boîtier (2), et lequel présente une lèvre d'étanchéité (20) formée en une pièce, déformable élastiquement dans la direction radiale et reposant de manière élastique dans le sens radial contre une surface d'étanchéité (18) du disque (6) de clapet, le siège annulaire (22) présentant un dégagement (24) enserrant la zone de la surface extérieure radiale (46) de la lèvre d'étanchéité (20), ***caractérisé en ce qu'***après le montage du siège annulaire (22) et du disque (6) de clapet dans le boîtier (2), la lèvre d'étanchéité (20) est pliée au moins partiellement, lors de la première fermeture du disque (6) de clapet, par une déformation plastique résiduelle vers l'extérieur dans le sens radial selon un angle prédéterminé (42), ***et en ce que*** l'angle (42) imposé par déformation plastique résiduelle est supérieur à l'angle duquel la lèvre d'étanchéité (20) est pliée élastiquement vers l'extérieur lors d'une autre fermeture du disque de clapet (6).

2. Clapet selon la Revendication 1, ***caractérisé en ce que*** le dégagement (24) est placé dans une surface frontale axiale (34) du siège annulaire (22).

3. Clapet selon la Revendication 1 ou 2, ***caractérisé en ce que***, avant la déformation plastique résiduelle (45) de la lèvre d'étanchéité (20), sa surface intérieure (44) et/ou sa surface extérieure (46) sont placées pour l'essentiel sur des surfaces d'enveloppe cylindrique coaxiales à l'axe longitudinal (4).

4. Clapet selon l'une des Revendications 1 à 3, ***caractérisé en ce que*** la lèvre d'étanchéité (20) présente une section pour l'essentiel rectangulaire.

5. Clapet selon l'une des Revendications 1 à 4, ***caractérisé en ce que*** le boîtier (2) présente un premier évidement annulaire (36), dans lequel la lèvre d'étanchéité (20) dépasse avec son extrémité libre, et/ou ***en ce qu'***entre l'extrémité libre (49) et la paroi de boîtier opposée, seule une fente étroite (41) est présente.

6. Clapet selon l'une des Revendications 2 à 5, ***caractérisé en ce que*** la lèvre d'étanchéité (20) présente une longueur (50) qui est supérieure d'a facteur prédéterminé à la profondeur axiale (48) du dégagement (24), ce facteur étant de préférence compris entre 1,2 et 2, en particulier entre 1,4 et 1,7.

7. Clapet selon l'une des Revendications 1 à 2, ***caractérisé en ce que*** la lèvre d'étanchéité (20) présente sur sa longueur axiale (50) pour l'essentiel la même largeur, cette largeur étant comprise entre 0,8 et 1,7, de préférence entre 1,0 et 1,5 mm, des valeurs plus grandes étant prises pour la largeur lorsque la largeur nominale du clapet augmente.

8. Clapet selon l'une des Revendications 1 à 7, ***caractérisé en ce que*** l'angle d'inclinaison de la lèvre d'étanchéité (20) par rapport à l'axe longitudinal (4) dans la position ouverte du disque (6) de clapet est compris entre 22 et 10 degrés d'angle, essentiellement entre 19 et 12 degrés d'angle, et ***en ce que***, dans la position fermée du disque (6) de clapet, la lèvre d'étanchéité (20) forme par rapport à l'axe longitudinal (4) un angle compris entre 22 et 10 degrés d'angle, en particulier entre 21 et 13 degrés d'angle, les plus grandes des valeurs angulaires citées s'appliquant aux plus petites largeurs nominales du clapet (6), en particulier pour des largeurs nominales de 80 mm, et les plus petites valeurs angulaires concernant les plus grandes largeurs nominales, en particulier des largeurs nominales de 300 mm, du clapet (6).

9. Clapet selon l'une des Revendications 1 à 8, ***caractérisé en ce que*** le siège annulaire (22) est constitué de métal et présente un module d'élasticité compris entre 150 et 230 kN/mm², de préférence entre 170 et 200 kN/mm².

10. Clapet selon l'une des Revendications 1 à 9, ***caractérisé en ce que*** le siège annulaire (22) est placé dans un deuxième évidement annulaire (26) du boîtier (2) et/ou présente une surface frontale axiale (36) qui est située pour l'essentiel dans le même plan radial que la surface d'extrémité (38) du boîtier (2).
